# EUROPÄISCHE PATENTSCHRIFT

(11) **EP 2 516 197 B1**
(45) Veröffentlichungstag und Bekanntmachung des Hinweises auf die Patenterteilung: **30.05.2018**
(21) Anmeldenummer: 10775808.8
(22) Anmeldetag: 05.11.2010
(51) Int. Cl.: B60L 3/00, H02M 1/32

(54) **VERFAHREN UND VORRICHTUNG ZUR ENTLADUNG EINES ENERGIESPEICHERS IN EINEM HOCHSPANNUNGSNETZ**
METHOD AND APPARATUS FOR DISCHARGING AN ENERGY STORE IN A HIGH-VOLTAGE POWER SUPPLY SYSTEM
PROCÉDÉ ET DISPOSITIF POUR LE DÉCHARGEMENT D'UN ACCUMULATEUR D'ÉNERGIE DANS UN RÉSEAU DE HAUTE TENSION

(30) Priorität: 21.12.2009 DE 102009055053
(43) Veröffentlichungstag der Anmeldung: 31.10.2012
(73) Patentinhaber: Robert Bosch GmbH, 70442 Stuttgart (DE)
(72) Erfinder: VOEGELE, Andreas, 77815 Buehl (DE)
(86) Internationale Anmeldenummer: PCT/EP2010/066892
(87) Internationale Veröffentlichungsnummer: WO 2011/085838

(56) Entgegenhaltungen:
- DE-A1-102008 010 980
- FR-A1- 2 831 343
- JP-A- 2006 042 459
- US-A1- 2008 278 117

## Beschreibung

Die Erfindung betrifft ein Verfahren und eine Vorrichtung zur Entladung eines Energiespeichers, insbesondere eines Zwischenkreiskondensators, in einem Hochspannungsnetz, insbesondere einem Gleichspannungszwischenkreis in einem Kraftfahrzeug.

### Stand der Technik

Bei Hybridfahrzeugen oder Kraftfahrzeugen mit Elektro- oder Brennstoffzellenantrieb werden in der Regel Spannungen eingesetzt, die mehrere 100 Volt betragen können. Spannungen, die größer als 60 Volt werden dabei als "Hochspannung" bezeichnet. Aus Gründen der Personensicherheit müssen Hochspannungs-Bordnetze in Kraftfahrzeugen abschaltbar sein und innerhalb einer vorgegebenen Zeitspanne entladen werden können. Zu diesem Zweck umfassen bekannte Hochspannungs-Bordnetze aktive und/oder passive Entladevorrichtungen. Das Hochspannungsnetz in einem Hybridfahrzeug oder einem Kraftfahrzeug mit Elektro- oder Brennstoffzellenantrieb - häufig auch als Gleichspannungszwischenkreis bezeichnet - umfasst im einfachsten Fall eine Energiequelle in Form einer Batterie, einen Spannungsumrichter mit einem Gleichspannungszwischenkreiskondensator, welcher als Pufferkondensator zur Stabilisierung der Betriebsspannung von elektrischen Verbrauchern dient, einen oder mehrere elektrische Maschinen sowie weitere Hochspannungsverbraucher. Nach einer Trennung des Hochspannungsnetzes von der Energiequelle, welche zum Beispiel durch ein Abziehen der entsprechenden Steckverbindung im Rahmen von Wartungsarbeiten oder auch durch einen Unfall bewirkt werden kann, müssen alle Energiespeicher, welche an das Hochspannungsnetz oder den Gleichspannungszwischenkreis angeschlossen sind, entladen werden. Als Energiespeicher können dabei Kapazitäten, wie z.B. ein Zwischenkreiskondensator, oder beispielsweise aus ausdrehende Motoren fungieren. Eine übliche passive Entladevorrichtung, also eine Entladvorrichtung, deren Funktion auch bei Wegfall aller Versorgungs- und Steuerleitungen gewährleistet ist, sieht dabei im einfachsten Fall einen ohmschen Entladewiderstand vor, welcher permanent parallel zum Zwischenkreiskondensator geschaltet ist.

Aus der DE 10 2004 057 693 A1 ist eine Vorrichtung zur schnellen Entladung eines Kondensators, insbesondere eines Zwischenkreiskondensators, bekannt, wobei der Kondensator über einen Wechselrichter mit einer elektrischen Maschine in Verbindung steht und über einen Gleichspannungswandler mit einem weiteren elektrischen Ladungsspeicher, insbesondere einer Batterie, verbunden ist. Dabei umfasst der Gleichspannungswandler Mittel, die eine schnelle Entladung des Kondensators bei entsprechender Ansteuerung des Gleichspannungswandlers bewirken. Insbesondere wird dem Gleichspannungswandler batterieseitig zur Übernahme der abzubauenden elektrischen Leistung ein Widerstand mittels eines Schalters zugeschaltet.

Aus der DE 10 2007 047 713 A1 ist ein Verfahren zur Entladung eines Hochspannungsnetzes, insbesondere eines Gleichspannungszwischenkreises, welches mit einer Energiequelle über wenigstens einen Widerstand verbindbar ist, bekannt, bei dem der wenigstens eine Widerstand als gemeinsamer Widerstand sowohl für den Auflade- oder Vorladevorgang als auch für den Entladevorgang der Zwischenkreiskapazitäten des Gleichspannungszwischenkreises verwendet wird.

Eine weitere aus der DE 10 2008 010 978 A1 bekannte Vorrichtung zum Entladen eines elektrischen Netzes oder eines elektrischen Bauelements, umfassend einen schaltbaren Widerstand, sieht vor, dass der schaltbare Widerstand einen PTC-Widerstand und einen Schalter umfasst, die thermisch gekoppelt sind, und dass der Steueranschluss des Schalters mit der Netzspannung verbunden ist.

Die US 2008/0278117 A1 offenbart ein Verfahren zum automatischen Entladen eines elektrisch betriebenen Fahrzeugs, wobei bei einem Abschalten der Energieversorgung automatisch ein Entladewiderstand zum Entladen eines Zwischenkreiskondensators zugeschaltet wird.

Die Druckschrift FR 2 831 343 A1 offenbart eine Schaltungsanordnung zur Entladung eines Bufferkondensators, bei der ein Entladewiderstand nach einem Abziehen eines Kabelbaumsteckers automatisch zur Entladung eines Kondensators zugeschaltet wird.

### Offenbarung der Erfindung

Die vorliegende Erfindung schafft ein Verfahren zur Entladung eines Energiespeichers, insbesondere eines Zwischenkreiskondensators, in einem Hochspannungsnetz, insbesondere einem Gleichspannungszwischenkreis in einem Kraftfahrzeug, bei dem parallel zum Energiespeicher ein erster Entladewiderstand geschaltet ist und ein zweiter Entladewiderstand selbsttätig parallel zu dem ersten Entladewiderstand geschaltet wird, wenn die Spannung an dem Energiespeicher einen vorgegebenen Schwellwert unterschreitet.

Die vorliegende Erfindung schafft ferner eine Vorrichtung zur Entladung eines Energiespeichers, insbesondere eines Zwischenkreiskondensators, in einem Hochspannungsnetz, insbesondere einem Gleichspannungszwischenkreis in einem Kraftfahrzeug, mit einem ersten Entladezweig, welcher parallel zu dem Energiespeicher geschaltet ist und einen ersten Entladewiderstand umfasst, und einem zweiten Entladezweig, welcher parallel zu dem ersten Entladezweig geschaltet ist und welcher eine Reihenschaltung aus einem Schaltmittel und einem zweiten Entladewiderstand umfasst. Dabei ist ein Steueranschluss des Schaltmittels derart an den Energiespeicher angeschlossen, dass das Schaltmittel selbsttätig schließt, wenn die Spannung an dem Energiespeicher einen vorgegebenen Schwellwert unterschreitet.

Entladewiderstände, welche permanent parallel zu einem Energiespeicher eines Hochspannungsnetzes geschaltet sind, verbrauchen auch während des normalen Betriebes Leistung, welche in Form von Wärme an die Umgebung abgegeben wird. Um an dem Entladewiderstand, Temperaturen zu vermeiden, welche den Entladewiderstand schädigen könnten, ist es nötig, für den Entladewiderstand große Bauformen vorzusehen und/oder den Entladewiderstand durch mehrere Bauelemente zu realisieren, um die Verlustleistung auf eine größere Fläche zu verteilen. Das Vorsehen eines ersten Entladewiderstandes, welcher permanent parallel zum Energiespeicher eines Hochspannungsnetzes geschaltet ist, sowie eines zweiten zuschaltbaren Entladewiderstands erlaubt es, den ersten Entladewiderstand, welcher auch während des normalen Betriebes des Hochspannungsnetzes Leistung verbraucht, derart zu dimensionieren, dass die Verlustleistung und damit die abgestrahlte Wärme während des normalen Betriebs erheblich reduziert wird. Mit Hilfe des zweiten Entladewiderstands, der in geeigneter Weise dimensioniert ist und zu geeigneter Zeit zugeschaltet wird, lässt sich dennoch eine Entladung der im Hochspannungsnetz gespeicherten Energie innerhalb einer vorgegebenen Zeitspanne realisieren.

Gemäß einer Ausführungsform des erfindungsgemäßen Verfahrens ist der Schwellwert kleiner einer minimalen Betriebsspannung des Hochspannungsnetzes festgelegt. Auf diese Weise kann sichergestellt werden, dass der zweite Entladewiderstand, lediglich dann zugeschaltet wird, wenn die Spannung an dem Energiespeicher unterhalb der minimalen Betriebsspannung liegt. Der Stromfluss über den zweiten Ladewiderstand ist damit zeitlich stark begrenzt und tritt während des normalen Betriebs des Kraftfahrzeuges nur beim Abstellen und Einschalten des Kraftfahrzeuges auf. Aufgrund der zeitlich begrenzten Beanspruchung ist die Verlustleistung und damit die Wärmeentwicklung an dem zweiten Entladewiderstand erheblich reduziert, was es zum Beispiel erlaubt, Widerstände mit kleineren Bauformen zu verwenden und/oder auf aufwendige Maßnahmen zur Wärmeabfuhr zu verzichten.

Gemäß einer Ausführungsform der erfindungsgemäßen Vorrichtung wird der erste Entladewiderstand durch eine Reihenschaltung aus mindestens zwei Widerständen gebildet. Der erste Entladezweig umfasst damit eine Reihenschaltung aus mindestens zwei Widerständen, wobei der Steueranschluss des Schaltmittels elektrisch mit einem Mittelabgriff zwischen den Widerständen des ersten Entladezweiges verbunden ist. Die beiden Widerstände des ersten Entladezweiges dienen dann als Spannungsteiler, über welchen die Schaltspannung des Schaltmittels in dem zweiten Entladezweig eingestellt werden kann. Die beiden Widerstände des ersten Entladezweiges werden dabei vorteilhaft derart dimensioniert, dass das Schaltmittel schließt, sobald die Spannung an dem Energiespeicher unter die minimale Betriebsspannung des Hochspannungsnetzes fällt. Auf diese Weise wird mit geringem schaltungstechnischem Aufwand, ein selbsttätiges Schließen des Schaltmittels bei Unterschreiten eines vorgegebenen Schwellwertes der Spannung an dem Energiespeicher erreicht.

Gemäß einer weiteren Ausführungsform der erfindungsgemäßen Vorrichtung umfasst das Schaltmittel mindestens einen Feldeffekttransistor, insbesondere ist das Schaltmittel als selbstleitender Feldeffekttransistor ausgebildet. Die Verwendung eines selbstleitenden Feldeffekttransistors als Schaltmittel ermöglicht eine besonders einfache schaltungstechnische Realisierung der erfindungsgemäßen Vorrichtung.

Eine weitere vorteilhafte Ausführungsform der erfindungsgemäßen Vorrichtung sieht vor, dass der Gesamtwiderstand des ersten Entladungszweiges einen höheren Widerstandswert aufweist als der zweite Entladewiderstand. Ein hoher Widerstandswert des ersten Entladungszweiges stellt sicher, dass die Verlustleistung, welche im normalen Betrieb des Hochspannungsnetzes an dem ersten Entladewiderstand abfallen, und damit auch die Bauteiltemperaturen an den Widerständen erheblich gesenkt werden. Fällt die Spannung an dem Energiespeicher unter einen vorgegebenen Schwellwert, so kann ein zweiter Entladewiderstand parallel zugeschaltet werden, welcher einen deutlich geringeren Widerstandswert aufweist und damit die weitere Entladung des Energiespeichers erheblich beschleunigt. Aufgrund der nur kurzzeitigen Zuschaltung des zweiten Entladewiderstandes ergeben sich auch an diesem Entladewiderstand keine übermäßigen Bauteiltemperaturen, welche zu einer Schädigung des Entladewiderstands führen könnten und somit eine besonders große Bauform oder eine Verbauung mehrerer Bauelemente bedingen würden.

Neben einer passiven Entladevorrichtung ist häufig auch eine zusätzliche aktive Entladevorrichtung gefordert. Gemäß einer weiteren Ausführungsform der erfindungsgemäßen Vorrichtung ist der Steueranschluss des Schaltmittels zusätzlich mit einer Steuereinheit verbunden. Auf diese Weise kann der als Teil einer passiven Entladevorrichtung vorgesehene zweite Entladezweig auch zur aktiven Entladung des Energiespeichers des Hochspannungsnetzes genutzt werden. Dazu wird durch die Steuereinheit einfach ein entsprechendes Steuersignal an den Steueranschluss des Schaltmittels angelegt. Durch die Verwendung des zweiten Entladezweiges sind keine weiteren Bauelemente zur Realisierung einer aktiven Entladevorrichtung notwendig.

Es sei darauf hingewiesen, dass unter den Begriffen Widerstand und Entladewiderstand nicht nur ohmsche Widerstände zu verstehen sind, sondern auch andere elektrische Bauelemente, welche einen ohmschen Anteil aufweisen und somit geeignet sind, die Entladung des Energiespeichers zu unterstützen.

Weitere Merkmale und Vorteile von Ausführungsformen der Erfindung ergeben sich aus der nachfolgenden Beschreibung mit Bezug auf die beigefügten Figuren.

### Kurze Beschreibung der Figuren

Es zeigen:
- Figur 1: eine schematische Darstellung einer erfindungsgemäßen Vorrichtung zur Entladung eines Energiespeichers eines Hochspannungsnetzes und
- Figur 2: eine schematische Darstellung einer konkreten Ausführungsform einer erfindungsgemäßen Vorrichtung zur Entladung eines Energiespeichers eines Hochspannungsnetzes.

### Beschreibung der Ausführungsbeispiele

In den Figuren sind identische oder funktionsgleiche Komponenten jeweils mit dem gleichen Bezugszeichen gekennzeichnet.

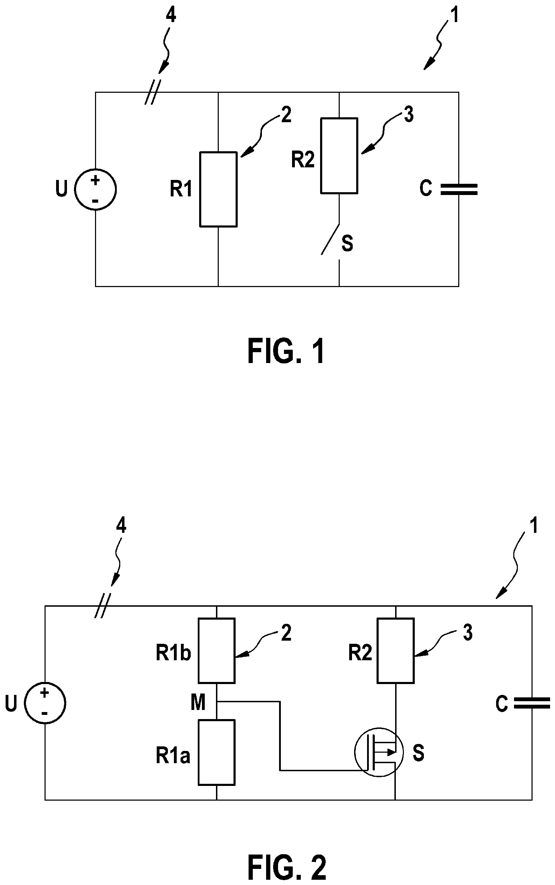

Figur 1 zeigt eine vereinfachte Darstellung einer Entladeschaltung für ein Hochspannungs-Bordnetz eines Hybrid-, Elektro- oder Brennstoffzellenfahrzeuges. Ein Hochspannungs-Bordnetz 1, häufig auch als Gleichspannungszwischenkreis bezeichnet, weist einen Energiespeicher in Form eines Zwischenkreiskondensators C auf, welcher üblicherweise als Pufferkondensator eingesetzt wird, um die Betriebsspannung von an das Hochspannungs-Bordnetz 1 angeschlossenen Verbrauchern zu stabilisieren. In bestimmten Situationen, wie zum Beispiel nach einem Unfall oder vor einer Wartung des Kraftfahrzeugs, kann es zu einer Trennung des Hochspannungsnetzes von einer Hochspannungsenergiequelle, welche in Figur 1 schematisch als Energiequelle U dargestellt ist, kommen. Im Fall eines Zweispannungs-Bordnetzes in einem Kraftfahrzeug entspricht die durch die Energiequelle U gelieferte Zwischenkreisspannung beispielsweise einer durch einen Gleichspannungswandler aufbereiteten, weitgehend konstanten Hochvoltspannung. Die Trennung des Hochspannungsnetzes von der Hochspannungsenergiequelle ist in Figur 1 durch die beiden Schrägstriche 4 angedeutet. Aus Gründen der Personensicherheit muss im Falle einer Trennung des Hochspannungsnetzes von der Hochspannungsenergiequelle die im Zwischenkreiskondensator C gespeicherte Ladung schnell abgebaut werden. Zu diesem Zweck sind zwei zu dem Zwischenkreiskondensator C parallel geschaltete Entladezweige 2 und 3 vorgesehen. Der erste Entladezweig 2 umfasst dabei einen ersten Entladewiderstand R1. Der zweite Entladezweig 3 umfasst eine Reihenschaltung aus einem Schaltmittel S sowie einem zweiten Entladewiderstand R2.

Zu Beginn eines Entladevorgangs des Zwischenkreiskondensators C ist das Schaltmittel S zunächst geöffnet, so dass der Zwischenkreis lediglich über den ersten Entladewiderstand R1 entladen wird. Fällt die Spannung an dem Zwischenkreiskondensator C unter einen vorgegebenen Schwellwert, so wird das Schaltmittel S geschlossen und somit der zweite Entladewiderstand parallel zum ersten Entladewiderstand R1 und zum Zwischenkreiskondensator C geschaltet. Da die Schaltungsanordnung eine passive Entladung des Zwischenkreises, das heißt eine Entladung unter Wegfall aller Versorgungs- und Steuerleitungen, realisieren soll, ist sicherzustellen, dass das Schaltmittel S bei Unterschreiten des vorgegebenen Spannungs-Schwellwertes an der Kapazität C selbsttätig schließt.

Dies kann beispielsweise dadurch realisiert werden, dass der erste Entladewiderstand R1 durch eine Reihenschaltung zweier Widerstände R1a und R1b realisiert wird (siehe Figur 2). Die beiden Widerstände R1a und R1b bilden dann einen Spannungsteiler, mit Hilfe dessen eine Schaltspannung des Schaltmittels S eingestellt werden kann.

Figur 2 zeigt eine derartige Anordnung mit einem Schaltmittel S in Form eines selbstleitenden Feldeffekttransistors. Der Steueranschluss des Schaltmittels S ist dabei elektrisch mit einem Mittelabgriff M zwischen den Widerständen R1a und R1b des ersten Entladezweiges 1 verbunden. Mit Hilfe eines selbstleitenden Feldeffekttransistors ist das selbsttätige Schließen des Schaltmittels S bei Erreichen eines Schwellwerts besonders einfach realisierbar. Selbstverständlich kann das Schaltmittel S aber auch mit Hilfe anderer Schaltelemente, insbesondere anderer Feldeffekttransistoren, realisiert werden. So ist beispielsweise auch eine geeignete Verschaltung zweier selbstsperrender Feldeffekttransistoren denkbar. Fällt die Spannung an der Kapazität C, so fällt auch der Spannungsabfall an dem Widerstand R1a. Sobald der Spannungsabfall an dem Widerstand R1a unter die Schaltschwelle des selbstleitenden Feldeffekttransistors S fällt, leitet dieser. Das wiederum führt dazu, dass der zweite Entladewiderstand R2 parallel zum ersten Entladewiderstand R1, also im dargestellten Ausführungsbeispiel parallel zur Reihenschaltung der Widerstände R1a und R1b geschaltet wird. Durch geeignete Dimensionierung der Entladewiderstände R1a, R1b und R2 kann erreicht werden, dass der zweite Entladewiderstand R2 selbsttätig parallel zu dem ersten Entladewiderstand R1 geschaltet wird, sobald die Spannung an dem Zwischenkreiskondensator C einen vorgegebenen Schwellwert unterschreitet. Vorteilhaft werden die Entladewiderstände R1a, R1b und R2 dabei derart dimensioniert, dass der Schwellwert unterhalb einer minimalen Betriebsspannung des Hochspannungsnetzes liegt. Auf diese Weise ist sichergestellt, dass im normalen Betrieb lediglich der erste Entladewiderstand R1 parallel zum Zwischenkreiskondensator C geschaltet ist. Dieser erste Entladewiderstand R1 ist dabei so groß gewählt, dass die Verlustleistung an dem Entladewiderstand R1 keine übermäßige Wärmeentwicklung verursacht, so dass keine besonderen Anforderungen an die Bauform des Entladewiderstandes gestellt werden müssen oder zusätzliche Maßnahmen zur Beherrschung der Wärmeentwicklung erforderlich sind. Der parallel schaltbare Entladewiderstand R2 hingegen weist einen deutlich geringeren Widerstandswert auf, was nach erfolgter Parallelschaltung zu einer deutlichen Beschleunigung des Entladevorgangs führt.

Auch im Normalbetrieb kommt es im Rahmen des Einschaltens oder Abstellen des Kraftfahrzeuges zu Betriebssituationen, bei welchen die Versorgungsspannung des Hochspannungsnetzes und damit auch die Spannung an dem Zwischenkreiskondensator unter den vorgegebenen Schwellwert der Entladevorrichtung fällt. So ist beispielsweise beim Start des Kraftfahrzeuges, das heißt im Falle, dass die Versorgungsspannung erst aufgebaut wird, das Schaltmittel S zunächst geschlossen und damit der zweite Entladewiderstand R2 stromdurchflossen. Sobald der Spannungsabfall über dem Widerstand R1a die Schaltschwelle des Schaltmittels S überschreitet, öffnet das Schaltmittel S, so dass im Nennbetrieb lediglich der erste Entladewiderstand R1 in dem ersten Entladezweig 2 beansprucht wird. Während des Startvorgangs bildet die Entladeschaltung damit einen größeren Verbraucher als sie im Nennbetrieb darstellt. Insgesamt verbraucht die Entladeschaltung jedoch um Größenordnungen weniger Leistung als andere Verbraucher, welche typischer Weise an das Hochspannungsnetz angeschlossen sind. Für eine nicht dargestellte zentrale Steuerelektronik ist dieser Effekt beim Start des Kraftfahrzeuges damit vernachlässigbar.

Beim Ausschalten des Kraftfahrzeuges wird die Versorgungsspannung von der zentralen Steuerelektronik heruntergefahren. Wird die Schaltschwelle des Schaltmittels S unterschritten, so unterstützt der zugeschaltete zweite Entladewiderstand R2 die zentrale Energieversorgung bei der Entladung des Zwischenkreiskondensators. Da das Starten und Stoppen des Kraftfahrzeugs zeitlich begrenzte Vorgänge darstellt, ist auch die Beanspruchung des zweiten Entladewiderstandes begrenzt. Die Beanspruchung muss aber dennoch bei der Auslegung und Dimensionierung des zweiten Entladewiderstandes R2 berücksichtigt werden. Zusätzlich zur dargestellten Verwendung der erfindungsgemäßen Vorrichtung zur passiven Entladung eines Energiespeichers, wie z.B. einer Kapazität, eines Hochspannungsnetzes kann die Schaltung auch zur aktiven Entladung genutzt werden. Dazu kann der Steueranschluss des Schaltmittels S zusätzlich mit einer nicht dargestellten Steuereinheit verbunden sein, welche das Schaltmittel S aktiv ansteuern kann, so dass der zweite Entladewiderstand R2 aktiv zu- oder weggeschaltet werden kann.

In den dargestellten Ausführungsbeispielen enthält das Hochspannungsnetz jeweils nur einen Energiespeicher in Form der Kapazität C. Es sei aber darauf hingewiesen, dass ein Hochspannungsnetz auch mehrere Energiespeicher umfassen kann, welche im Fall einer Trennung des Hochspannungsnetzes von der Hochspannungsenergiequelle alle entladen werden müssen. Dies kann dadurch erreicht werden, dass für jeden Energiespeicher eine gesonderte erfindungsgemäße Entladeschaltung vorgesehen ist. Alternativ dazu kann auch eine übergeordnete Entladeschaltung vorgesehen sein, welche zur Entladung mehrerer oder aller in dem Hochspannungsnetz vorhandenen Energiespeicher dient.

## Patentansprüche

1. Verfahren zur Entladung eines Energiespeichers (C), insbesondere eines Zwischenkreiskondensators, in einem Hochspannungsnetz (1), insbesondere einem Gleichspannungszwischenkreis in einem Kraftfahrzeug, bei dem parallel zum Energiespeicher (C) ein erster Entladewiderstand (R1) geschaltet ist **dadurch gekennzeichnet, dass**
ein zweiter Entladewiderstand (R2) selbsttätig parallel zu dem ersten Entladewiderstand (R1) geschaltet wird, wenn eine Spannung an dem Energiespeicher (C) einen vorgegebenen Schwellwert unterschreitet.

2. Verfahren nach Anspruch 1, wobei in Reihe zu dem zweiten Entladewiderstand (R2) ein Schaltmittel (S) vorgesehen ist und ein Steueranschluss des Schaltmittels (S) derart an den Energiespeicher (C) angeschlossen ist, dass das Schaltmittel (S) selbsttätig schließt, wenn die Spannung an dem Energiespeicher (C) den vorgegebenen Schwellwert unterschreitet.

3. Verfahren nach einem der Ansprüche 1 oder 2, wobei der Schwellwert kleiner einer minimalen Betriebsspannung des Hochspannungsnetzes (1) festgelegt ist.

4. Vorrichtung zur Entladung eines Energiespeichers (C), insbesondere eines Zwischenkreiskondensators, in einem Hochspannungsnetz (1), insbesondere einem Gleichspannungszwischenkreis in einem Kraftfahrzeug, mit
- einem ersten Entladezweig (2), welcher parallel zu dem Energiespeicher (C) geschaltet ist und einen ersten Entladewiderstand (R1) umfasst, und
- einem zweiten Entladezweig (3), welcher parallel zu dem ersten Entladezweig (2) geschaltet ist und welcher eine Reihenschaltung aus einem Schaltmittel (S) und einem zweiten Entladewiderstand (R2) umfasst,
**dadurch gekennzeichnet, dass**
ein Steueranschluss des Schaltmittels (S) derart an den Energiespeicher (C) angeschlossen ist, dass das Schaltmittel (S) selbsttätig schließt, wenn eine Spannung an dem Energiespeicher (C) einen vorgegebenen Schwellwert unterschreitet.

5. Vorrichtung nach Anspruch 4, wobei der erste Entladezweig (2) eine Reihenschaltung aus mindestens zwei Widerständen (R1a, R1b) umfasst und der Steueranschluss des Schaltmittels (S) elektrisch mit einem Mittelabgriff (M) zwischen den Widerständen (R1a, R1b) des ersten Entladezweiges (2) verbunden ist.

6. Vorrichtung nach einem der Ansprüche 4 oder 5, wobei das Schaltmittel (S) mindestens einen Feldeffekttransistor umfasst.

7. Vorrichtung nach Anspruch 6, wobei das Schaltmittel (S) als selbstleitender Feldeffekttransistor ausgebildet ist.

8. Vorrichtung nach einem der Ansprüche 4 bis 7, wobei der erste Entladewiderstand (R1) einen höheren Widerstandswert aufweist als der zweite Entladewiderstand (R2).

9. Vorrichtung nach einem der Ansprüche 4 bis 8, wobei der Steueranschluss des Schaltmittels (S) zusätzlich mit einer Steuereinheit verbunden ist.

## Claims

1. Method for discharging an energy store (C), in particular a DC link capacitor, in a high-voltage network (1), in particular a DC link in a motor vehicle, wherein a first discharge resistor (R1) is connected in parallel with the energy store (C), **characterized in that**
a second discharge resistor (R2) is automatically connected in parallel with the first discharge resistor (R1) when a voltage at the energy store (C) falls below a specified threshold value.

2. Method according to Claim 1, wherein a switching means (S) is provided in series with the second discharge resistor (R2) and a control connection of the switching means (S) is connected to the energy store (C) in such a way that the switching means (S) automatically closes when the voltage at the energy store (C) falls below the specified threshold value.

3. Method according to either of Claims 1 and 2, wherein the threshold value is set to be lower than a minimum operating voltage of the high-voltage network (1).

4. Apparatus for discharging an energy store (C), in particular a DC link capacitor, in a high-voltage network (1), in particular a DC link in a motor vehicle, having
- a first discharge branch (2), which is connected in parallel with the energy store (C) and comprises a first discharge resistor (R1), and
- a second discharge branch (3), which is connected in parallel with the first discharge branch (2) and which comprises a series circuit composed of a switching means (S) and a second discharge resistor (R2),
**characterized in that**
a control connection of the switching means (S) is connected to the energy store (C) in such a way that the switching means (S) automatically closes when a voltage at the energy store (C) falls below a specified threshold value.

5. Apparatus according to Claim 4, wherein the first discharge branch (2) comprises a series circuit composed of at least two resistors (R1a, R1b) and the control connection of the switching means (S) is electrically connected to a centre tap (M) between the resistors (R1a, R1b) of the first discharge branch (2).

6. Apparatus according to either of Claims 4 and 5, wherein the switching means (S) comprises at least one field-effect transistor.

7. Apparatus according to Claim 6, wherein the switching means (S) is designed as a normally on field-effect transistor.

8. Apparatus according to one of Claims 4 to 7, wherein the first discharge resistor (R1) has a higher resistance value than the second discharge resistor (R2) .

9. Apparatus according to one of Claims 4 to 8, wherein the control connection of the switching means (S) is also connected to a control unit.

## Revendications

1. Procédé de décharge d'un accumulateur d'énergie (C), notamment d'un condensateur de circuit intermédiaire, dans un réseau à haute tension (1), notamment un circuit intermédiaire à tension continue dans un véhicule automobile, avec lequel une première résistance de décharge (R1) est branchée en parallèle avec l'accumulateur d'énergie (C),
**caractérisé en ce que**
une deuxième résistance de décharge (R2) est commutée automatiquement en parallèle avec la première résistance de décharge (R1) lorsqu'une tension aux bornes de l'accumulateur d'énergie (C) devient inférieure à une valeur de seuil prédéfinie.

2. Procédé selon la revendication 1, un moyen de commutation (S) étant présent en série avec la deuxième résistance de décharge (R2) et une borne de commande du moyen de commutation (S) étant raccordée à l'accumulateur d'énergie (C) de telle sorte que le moyen de commutation (S) se ferme automatiquement lorsque la tension aux bornes de l'accumulateur d'énergie (C) devient inférieure à la valeur de seuil prédéfinie.

3. Procédé selon la revendication 1 ou 2, la valeur de seuil étant fixée inférieure à une tension de service minimale du réseau à haute tension (1).

4. Dispositif pour décharger un accumulateur d'énergie (C), notamment d'un condensateur de circuit intermédiaire, dans un réseau à haute tension (1), notamment un circuit intermédiaire à tension continue dans un véhicule automobile, comprenant
- une première branche de décharge (2), qui est branchée en parallèle avec l'accumulateur d'énergie (C) et comporte une première résistance de décharge (R1), et
- une deuxième branche de décharge (3), qui est branché en parallèle avec la première branche de décharge (2) et qui comporte un circuit série constitué d'un moyen de commutation (S) et d'une deuxième résistance de décharge (R2),
**caractérisé en ce que**
une borne de commande du moyen de commutation (S) est raccordée à l'accumulateur d'énergie (C) de telle sorte que le moyen de commutation (S) se ferme automatiquement lorsqu'une tension de l'accumulateur d'énergie (C) devient inférieure à une valeur de seuil prédéfinie.

5. Dispositif selon la revendication 4, la première branche de décharge (2) comportant un circuit série constitué d'au moins deux résistances (R1a, R1b) et la borne de commande du moyen de commutation (S) est reliée électriquement à une prise centrale (M) entre les résistances (R1a, R1b) de la première branche de décharge (2).

6. Dispositif selon l'une des revendications 4 ou 5, le moyen de commutation (S) comportant au moins un transistor à effet de champ.

7. Dispositif selon la revendication 6, le moyen de commutation (S) étant réalisé sous la forme d'un transistor à effet de champ autoconducteur.

8. Dispositif selon l'une des revendications 4 à 7, la première résistance de décharge (R1) possédant une valeur de résistance supérieure à celle de la deuxième résistance de décharge (R2).

9. Dispositif selon l'une des revendications 4 à 8, la borne de commande du moyen de commutation (S) étant en plus reliée à une unité de commande.
